# EUROPÄISCHE PATENTSCHRIFT

(11) **EP 0 458 096 B1**
(45) Veröffentlichungstag und Bekanntmachung des Hinweises auf die Patenterteilung: **19.04.1995**
(21) Anmeldenummer: 91107085.2
(22) Anmeldetag: 02.05.1991
(51) Int. Cl.: G02B 21/10

(54) **Faseroptik-Ringlicht**
Fibre-optic ring light
Dispositif annulaire d'illumination à fibre optique

(30) Priorität: 19.05.1990 DE 4016264
(43) Veröffentlichungstag der Anmeldung: 27.11.1991
(73) Patentinhaber: FASEROPTIK HENNING GmbH, D-90584 Allersberg (DE)
(72) Erfinder: Henning, Wolfram, W-8501 Allersberg (DE)
(74) Vertreter: Matschkur, Götz, Lindner Patent- und Rechtsanwälte

(56) Entgegenhaltungen:
- DE-A- 593 232
- DE-A- 3 200 938
- US-A- 4 729 070

## Beschreibung

Die Erfindung bezieht sich auf eine faseroptische Mehrpunktleuchte zur Beleuchtung des Arbeitsfeldes von Mikroskopen, mit einem zylinderförmigen Kopf eines zylinderförmigen Gehäuses, in dem die aus einem Lichtleitfaseranschlußkabel einlaufenden Lichtleitfasern in Bündel aufgeteilt und zu einer quer zur optischen Achse der Mehrpunktleuchte liegenden ringförmigen Lichtaustrittsfläche geführt sind, wobei Einrichtungen vorgesehen sind, so daß die Austrittsrichtung der Teillichtbündel und damit der Schnittpunkt der Symmetrieachse der Teillichtbündel mit der optischen Achse auf der optischen Achse verschiebbar ist.

Bei faseroptischen Mehrpunktleuchten mit einem zylinderförmigen Kopf wird das Licht eines Lichtprojektors über eine Faserleitung ringförmig um das Mikroskopobjektiv aufgeteilt, wobei zwei unterschiedliche Aufteilungsarten bekannt sind, nämlich entweder ein geschlossener Ringspalt von Fasern, welcher das Licht auf die Arbeitsebene des Mikroskops wirft, oder aber anstelle eines geschlossenen Faserspaltes eine Vielzahl von Austritts-Lichtpunkten, die rings um das Mikroskopobjektiv verteilt angeordnet sind. Bei beiden Systemen streut das Licht mit einem Lichtaustrittswinkel der Faser (typisch +-30°) von der Lichtaustrittsstelle (Ringspalt oder Lichtpunkt) über den Arbeitsbereich des Mikroskops. Hierdurch wird eine wesentlich größere Fläche beleuchtet, als für die mikroskopische Arbeit im Fokusbereich des Mikroskops erforderlich ist. Lichtleitersysteme in derartigen Anordnungen stellen somit nur einen kleinen Teil des erzeugten Lichtstromes dem Anwendungsfall zu Verfügung.

Bei Vorsehen einer Fokussieroptik, um das Licht stärker auf den auszuleuchtenden relativ kleinen Arbeitsbereich zu bündeln, ergibt sich die Schwierigkeit, daß faseroptische Mehrpunktleuchten mit einem fokussierten Lichtstrahl zwar einen hohen optischen Wirkungsgrad haben, sich aber nur in dem einmal konstruktiv festgesetzten Arbeitsabstand einsetzen lassen. Bei einer Veränderung des Arbeitsabstandes, wie er bei Mikroskopen sehr häufig durch Vorsatzteile erforderlich ist, wäre jedesmal auch ein entsprechend vorbereitetes, auf diesen Arbeitsabstand abgestimmtes fokussiertes System erforderlich.

Zur Vermeidung dieser Schwierigkeiten ist in der Deutschen Offenlegungsschrift DE 32 00 938 A1 auch bereits eine faseroptische Mehrpunktleuchte mit variabler Brennweite vorgeschlagen worden. Die Brennweitenveränderung, also die Veränderung der Austrittsrichtung der Teillichtbündel, so daß sie sich an unterschiedlichen Punkten der optischen Achse des Systems schneiden, wodurch bei einem Mikroskop die Lage dieses Schnittpunktes, d.h. des Ausleuchtungsfeldes, entsprechend der veränderten eingestellten Vergrößerung und damit im veränderten Objektabstand variiert werden kann, erfolgt dabei durch eine Verschiebung der Enden der Lichtleiter.

Diese Art der Veränderung der Brennweite durch Verschiebung der Enden der Lichtleiter hat jedoch den Nachteil, daß genau so viele Fokussierungselemente vorgesehen und radial verschoben werden müssen, wie Teillichtleiterbündel, wenn eine solche zusätzliche Fokussierung vorgesehen werden soll. Darüber hinaus ergibt sich auch noch die weitere Schwierigkeit, daß durch das ständige Hin- und Herbiegen der Lichtleiterenden die Gefahr besteht, daß diese beschädigt werden und damit ein aufwendiger Austausch der Lichtleiter in periodischen Abständen notwendig ist.

Der Erfindung liegt daher die Aufgabe zugrunde, eine faseroptische Mehrpunktleuchte der eingangs genannten Art so weiterzubilden, daß sich ein wartungsfreies System ergibt, bei dem auch eine zusätzliche Fokussierung leichter zu realisieren ist.

Zur Lösung dieser Aufgabe ist erfindungsgemäß vorgesehen, daß als Einrichtungen eine Anzahl von jeweils einem Segment der ringförmigen Lichtaustrittsfläche zugeordneten Fokussierungs elementen vorgesehen ist, wobei zur Veränderung der Austrittsrichtung bzw. der Lage des Schnittpunktes der Symmetrieachse der Teillichtbündel mit der optischen Achse die Fokussierungselemente gegenüber den ortsfestliegenden Enden der Lichtleiter radial bezüglich der optischen Achse verschiebbar sind.

Die Fokussierungselemente können dabei im Falle einer faseroptischen Mehrpunktleuchte mit geschlossenem Faserspalt kurze Zylinderlinsen sein und im Falle einer faseroptischen Mehrpunktleuchte mit einer Vielzahl von beabstandeten Austritts-Lichtpunkten jeweils Einzellinsen, insbesondere Kugellinsen. In letzterem Fall läßt sich exakt jedem Lichtaustrittspunkt eine Kugellinse zuordnen, so daß überhaupt keine Verluste auftreten, während infolge der radialen Verschiebbarkeit bei einem geschlossene Faserspalt der Zylinderlinsen ja einen kurzen Abstand voneinander aufweisen müssen. Das in diesen Abstandsbereich abgestrahlte Licht wird von der Fokussierung nicht miterfaßt. Demzufolge ist die erfindungsgemäße Fokussieranordnung bevorzugt für faseroptische Mehrpunktleuchten mit einer Vierzahl von einzelnen beabstandeten Lichtpunkten geeignet, jedoch durchaus auch mit Vorteil für faseroptische Mehrpunktleuchten mit geschlossenem Faserspalt einsetzbar.

Der Erfindung der fokussierten faseroptischen Mehrpunktleuchte mit Schnittpunktveränderung liegt dabei folgender Gedanke zugrunde. Die Lichtaustrittsrichtung jedes einzelnen Lichtpunktes der Mehrpunktleuchte (entsprechendes gilt für die einzelnen Abschnitte des Austrittsspaltes bei einem geschlossenen Faserspalt) wird über ein mechanisches System verändert. Erfolgt die Veränderung an allen Lichtaustrittsoptiken in gleicher Weise, so wandert der Schnittpunkt aller Lichtkegel auf der optischen Achse des Mikroskops entlang und der Schnittpunkt der Lichtbündel läßt sich somit auf jeden Arbeitsabstand des Mikroskops einstellen.

Die Ausbildung der Fokussierungsoptik kann dabei in Weiterbildung der Erfindung so getroffen sein, daß die unter der Wirkung von sie nach außen drückenden Federn stehenden Fokussierungselemente durch einen äußeren, axial bewegbaren Verstellkegelring radial verschiebbar sind, wobei dieser Verstellkegelring bevorzugt Teil eines auf das gehäuse aufschraubbaren Schraubrings sein kann. Durch einfaches Verdrehen dieses Schraubrings verändert sich seine axiale Stellung und damit die axiale Stellung des Verstellkegelrings, was wiederum die bereits angesprochene radiale Verstellung der Fokussierungselemente zur Folge hat.

Um Abschattungsprobleme zwischen dem Verstellkegelring und den Fokussierungselementen zu vermeiden, kann in weiterer Ausgestaltung der Erfindung zwischen jedem Fokussierungselement und dem Verstellkegelring jeweils eine Zwischenkugel angeordnet sein, wobei schließlich mit Vorteil die Fokussierungselemente sowie ggfs. die Zwischenkugeln in radialen Führungen des gehäuses angeordnet sein können.

Anstelle der radialen Verstellung der Fokussierungselemente könnte selbstverständlich auch eine radiale Verstellung der Enden der Lichtleiter vorgesehen sein, da eine solche radiale Verstellung der Lichtleiterenden letztendlich in gleicher Weise zu einer Verschwenkung der Lichtkegel führt und damit zu einer Veränderung der Schnittpunkte aller Lichtkegel auf der optischen Achse des Mikroskops.

Schließlich liegt es auch noch im Rahmen der Erfindung, daß jedes Fokussierungselement zusammen mit dem (den) zugehörigen Lichtleiterende(n) in einer festen Verbindung steht und beide Elemente gemeinsam um eine zur Ebene aus optischer Achse und Strahlrichtung senkrechte Achse schwenkbar sind, wobei die Ausbildung bevorzugt so getroffen sein kann, daß die Enden der Lichtleiter und die Fokussierungselemente jeweils in Exzenterscheiben gehaltert sind.

Durch diese Ausbildung, bei der die Verstellung aller Exzenterscheiben wiederum durch den bereits vorstehend angesprochenen Verstellkegelring erfolgen könnte, ergibt sich trotz starrer Zuordnung zwischen Fokussierungselement und Lichtleiter wiederum die für das erfindungsgemäße Verstellprinzip entscheidende Verschwenkung des Austrittskegels in den einzelnen Lichtleitern und damit die Möglichkeit einer gezielten Veränderung des Schnittpunktes aller Lichtaustrittskegel auf der optischen Achse, um die Beleuchtung stets optimal an den gewünschten Objektabstand anpassen zu können.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen axialen Teilschnitt durch eine faseroptische Mehrpunktleuchte mit einzelnen Lichtaustrittspunkten und radial verstellbaren Kugellinsen als Fokussierungselement in einer ersten Arbeitsstellung und
- Fig. 2: einen der Fig. 1 entsprechenden Teilschnitt durch die faseroptische Mehrpunktleuchte in einer anderen Einstellung der Arbeitsdistanz.

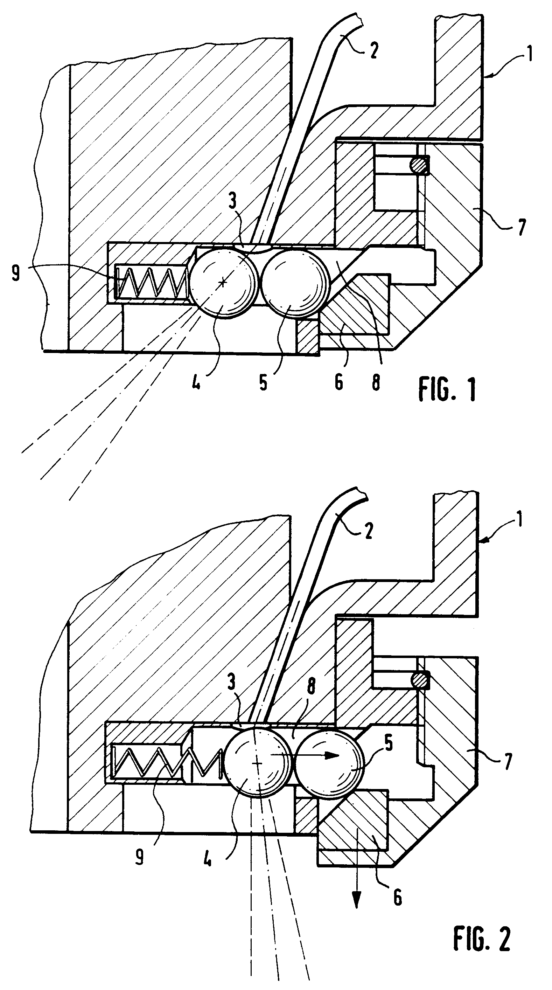

Die faseroptische Mehrpunktleuchte gemäß den Figuren 1 und 2 umfaßt ein zylinder förmiges Gehäuse 1, in welchem auf einem Kreisring verteilt eine Vielzahl von Lichtleitern 2 eingebettet sind, die eine entsprechende Vielzahl von Austritts-Lichtpunkten 3 bilden. Zur Fokussierung des Austrittslichtbündels jedes Lichtleiters 2 ist diesem als Fokussierungselement 4 eine Kugellinse zugeordnet, die unter der Wirkung einer sie nach außen drückenden Feder 9 steht. Die Kugellinse stützt sich über eine Zwischenkugel 5, die Abschattungseffekte vermeidet, an einem Verstellkegelring 6 ab, der Teil eines Schraubrings 7 ist. Durch Aufschrauben des Schraubrings 7 auf das vordere Ende des Ringlichtgehäuses 1 läßt sich der axiale Abstand verändern, so daß die Kugellinse zwischen der minimalen Einstellung gemäß Fig. 1 und der maximalen Einstellung gemäß Fig. 2 verschiebbar ist.

Die Kugellinsen und die Zwischenkugeln 5 werden dabei bevorzugt in radialen Führungen 8 des gehäuses 1 geführt.

## Patentansprüche

1. Faseroptische Mehrpunktleuchte zur Beleuchtung des Arbeitsfeldes von Mikroskopen, mit einem zylinderförmigen Kopf eines zylinderförmigen Gehäuses, in dem die aus einem Lichtleitfaseranschlußkabel einlaufenden Lichtleitfasern in Bündel aufgeteilt und zu einer quer zur optischen Achse der Mehrpunktleuchte liegenden ringförmigen Lichtaustrittsfläche geführt sind, wobei Einrichtungen vorgesehen sind, so daß die Austrittsrichtung der Teillichtbündel und damit der Schnittpunkt der Symmetrieachse der Teillichtbündel mit der optischen Achse auf der optischen Achse verschiebbar ist, dadurch gekennzeichnet, daß als Einrichtungen eine Anzahl von jeweils einem Segment der ringförmigen Lichtaustrittsfläche zugeordneten Fokussierungselementen (4) vorgesehen ist, wobei zur Veränderung der Austrittsrichtung bzw. der Lage des Schnittpunktes der Symmetrieachse der Teillichtbündel mit der optischen Achse die Fokussierungselemente (4) gegenüber den ortsfestliegenden Enden der Lichtleiter (2) radial bezüglich der optischen Achse verschiebbar sind.

2. Faseroptische Mehrpunktleuchte nach Anspruch 1 mit einem geschlossenem Faserspalt, dadurch gekennzeichnet, daß die Fokussierungselemente (4) kurze Zylinderlinsen sind.

3. Faseroptische Mehrpunktleuchte nach Anspruch 1 mit einer Vielzahl von beabstandeten Austritts-Lichtpunkten, dadurch gekennzeichnet, daß jedem Austrittslichtpunkt (3) eine Kugellinse als Fokussierungselement (4) zugeordnet ist.

4. Faseroptische Mehrpunktleuchte nach einem der Ansprüche 1 bis 3, dadurch gekennzeichnet, daß die unter der Wirkung von sie nach außen drückenden Federn stehenden Fokussierungselemente (4) durch einen äußeren, axial bewegbaren Verstellkegelring (6) radial verschiebbar sind.

5. Faseroptische Mehrpunktleuchte nach Anspruch 4, dadurch gekennzeichnet, daß der Verstellkegelring (6) Teil eines auf das gehäuse (1) aufschraubbaren Schraubrings (7) ist.

6. Faseroptische Mehrpunktleuchte nach Anspruch 4 oder 5, dadurch gekennzeichnet, daß zwischen jedem Fokussierungselement (4) und dem Verstellkegelring (6) jeweils eine Zwischenkugel (5) angeordnet ist.

7. Faseroptische Mehrpunktleuchte nach einem der Ansprüche 1 bis 6, dadurch gekennzeichnet, daß die Fokussierungselemente (4) sowie ggfs. die Zwischenkugeln (5) in radialen Führungen (8) des gehäuses (1) angeordnet sind.

## Claims

1. Fibreoptic ring-light for illuminating the working area of microscopes, having a cylindrical head of a cylindrical housing, in which the light-conducting fibres running out of a light-conducting fibre connection cable are divided into bundles and are guided to an annular light discharge face lying transverse to the optical axis of the ring-light, wherein devices are provided so that the discharge direction of the partial beams and hence of the point of intersection of the axis of symmetry of the partial beams with the optical axis is displaceable on the optical axis, characterised in that as such devices a number of focusing elements (4) each associated with a segment of the annular light discharge face are provided, so that in order to vary the discharge direction or the position of the point of intersection of the axis of symmetry of the partial beams with the optical axis the focusing elements (4) are displaceable radially with respect to the optical axis relative to the fixed ends of the light conductors (2).

2. Fibreoptic ring-light according to claim 1, having a closed fibre gap, characterised in that the focusing elements (4) are short cylindrical lenses.

3. Fibreoptic ring-light according to claim 1, having a plurality of spaced light discharge points, characterised in that a spherical lens as a focusing element (4) is associated with each light discharge point (3).

4. Fibreoptic ring-light according to one of claims 1 to 3, characterised in that the focusing elements (4) under the action of springs pushing them outwards are radially displaceable by an outer, axially movable conical adjusting ring (6).

5. Fibreoptic ring-light according to claim 4, characterised in that the conical adjusting ring (6) is part of a screw ring (7) screwed on to the housing (1).

6. Fibreoptic ring-light according to claim 4 or 5, characterised in that a respective intermediate sphere (5) is disposed between each focusing element (14) and the conical adjusting ring (6).

7. Fibreoptic ring-light according to one of claims 1 to 6, characterised in that the focusing elements (14) and if necessary the intermediate spheres (5) are disposed in radial guides (8) of the housing (1).

## Revendications

1. Système d'éclairage à points multiples, à fibres optiques, destiné à éclairer le champ de travail de microscopes, comprenant une tête de forme cylindrique d'un carter de forme cylindrique, dans lequel les fibres optiques en provenance d'un câble de raccordement de fibres optiques, sont subdivisées en faisceaux, et sont amenées à une surface d'émergence de lumière, de forme annulaire, s'étendant transversalement à l'axe optique du système d'éclairage à points multiples, des dispositifs étant prévus afin que la direction d'émergence des faisceaux lumineux partiels et ainsi le point d'intersection de l'axe de symétrie des faisceaux lumineux partiels avec l'axe optique puisse être déporté sur l'axe optique, caractérisé en ce qu'en guise de dispositifs, est prévu un certain nombre d'éléments de focalisation (4) associés chacun à un segment de la surface d'émergence de lumière de forme annulaire, les éléments de focalisation (4), en vue de faire varier la direction d'émergence ou la position du point d'intersection de l'axe de symétrie des faisceaux lumineux partiels avec l'axe optique, étant déplaçables par rapport aux extrémités, en position fixe, des fibres optiques (2), radialement par rapport à l'axe optique.

2. Système d'éclairage à points multiples, à fibres optiques, selon la revendication 1, présentant un interstice de fibres fermé, caractérisé en ce que les éléments de focalisation (4) sont de courtes lentilles cylindriques.

3. Système d'éclairage à points multiples, à fibres optiques, selon la revendication 1, présentant un grand nombre de points d'émergence de lumière espacés, caractérisé en ce qu'à chaque point d'émergence de lumière (3), est associée, en guise d'élément de focalisation (4), une lentille sphérique.

4. Système d'éclairage à points multiples, à fibres optiques, selon l'une des revendications 1 à 3, caractérisé en ce que les éléments de focalisation (4) soumis à l'action de ressorts les poussant vers l'extérieur, sont déplaçables radialement au moyen d'une bague de réglage conique (6), extérieure, mobile axialement.

5. Système d'éclairage à points multiples, à fibres optiques, selon la revendication 4, caractérisé en ce que la bague de réglage conique (6) fait partie d'une bague filetée (7) pouvant être vissée sur le carter (1).

6. Système d'éclairage à points multiples, à fibres optiques, selon la revendication 4 ou 5, caractérisé en ce qu'entre chaque élément de focalisation (4) et la bague de réglage conique (6), est respectivement disposée une bille intermédiaire (5).

7. Système d'éclairage à points multiples, à fibres optiques, selon l'une des revendications 1 à 6, caractérisé en ce que les éléments de focalisation (4), ainsi que, le cas échéant, les billes intermédiaires (5), sont disposés dans des guidages (8) orientés radialement, du carter (1).
